# EUROPÄISCHE PATENTSCHRIFT

(11) **EP 3 085 997 B1**
(45) Veröffentlichungstag und Bekanntmachung des Hinweises auf die Patenterteilung: **22.07.2020**
(21) Anmeldenummer: 15164779.9
(22) Anmeldetag: 23.04.2015
(51) Int. Cl.: F16H 57/04

(54) **LUFTLEITHAUBE FÜR EIN GETRIEBE UND GETRIEBE MIT EINER LUFTLEITHAUBE**
AIR GUIDANCE HOOD FOR A GEARBOX AND GEARBOX WITH AN AIR GUIDANCE HOOD
DÉFLECTEUR POUR UN ENGRENAGE ET ENGRENAGE DOTÉ D'UN DÉFLECTEUR

(43) Veröffentlichungstag der Anmeldung: 26.10.2016
(73) Patentinhaber: Flender GmbH, 46395 Bocholt (DE)
(72) Erfinder: Becka, Simon, 45128 Essen (DE)
(74) Vertreter: Maier, Daniel Oliver

(56) Entgegenhaltungen:
- EP-A1- 2 410 210
- DE-A1-102005 031 197
- DE-A1-102008 010 912

## Beschreibung

Die Erfindung betrifft eine Luftleithaube für ein Getriebe, insbesondere eine Luftleithaube für einen Radiallüfter zur Kühlung eines Getriebes, sowie ein Getriebe mit einer Luftleithaube.

Getriebe werden durch die während des Betriebs anfallende Verlustleistung sehr warm. Eine sich im Getriebe einstellende Öltemperatur limitiert die zulässige mechanische Leistung des jeweiligen Getriebes. Externe Ölkühlanlagen sind oft unerwünscht, so dass eine Kühlung durch die das Getriebe umgebende Luft (Umgebungsluft) erfolgen muss.

Zu diesem Zweck sind sogenannte Luftleithauben für Getriebe bekannt. Diese werden allgemein eingesetzt, um eine von einem Radial- oder Axiallüfter erzeugte Luftströmung gezielt um das Gehäuse des jeweiligen Getriebes zu lenken. Üblicherweise werden Luftleithauben so ausgeführt, dass diese an einer Ventilatorseite (Saugseite) eine Öffnung zum Ansaugen von Umgebungsluft aufweisen. Ein radialer Bereich um den Lüfter ist rund oder eckig ausgeführt. Angeschlossen an einen solchen ersten Teil der Luftleithaube findet sich ein das Getriebegehäuse einhausender, eckiger Teil.

Aus der EP 2 410 210 A1 ist ein Getriebe mit einem Getriebegehäuse, einer Antriebswelle, einem auf der Antriebswelle angebrachten Radiallüfter und einer an dem Getriebegehäuse angebrachten, den Radiallüfter umschließenden und dort als Motorlaterne bezeichneten Luftleithaube bekannt.

Die DE 198 44 04 U beschreibt einen Lüfter, der in Verbindung mit einer Luftleithaube zur Oberflächenkühlung eines Getriebes eingesetzt wird. Der Lüfter ist von der Luftleithaube umgeben. Die Luftleithaube lenkt den vom Lüfter erzeugten Luftstrom auf das unmittelbar an den Lüfter anschließende Getriebegehäuse.

Aus der DE 10 2005 031 197 A1 ist ein Antrieb mit Motor, Kupplung und Getriebe bekannt. Zur Kühlung des Getriebes ist ein mit einer Welle des Getriebes verbundener und als Axial- oder Radiallüfter ausgeführter Lüfter vorgesehen. Dieser befindet sich in einer eckigen Lüfterhaube mit zunächst schrägen und - vom Lüfter in Richtung auf das Getriebe gesehen - ein zunehmend größeres Volumen einschließenden Wandflächen, die abschließend in zur Getriebewelle parallele Wandflächen übergehen. Zum Umlenken einer vom Lüfter erzeugten radialen Luftströmung ist dem Lüfter im Innern der Lüfterhaube ein Umlenkring zugeordnet.

Aus der DE 10 2008 010 912 A1 ist ebenfalls ein Getriebe mit einem von einem Luftleitring umschlossenen Lüfterrad im Innern einer eckigen Lüfterhaube bekannt. Dort ist der Luftleitring mit dem Lüfterrad verbunden.

Die DE 10 2012 013 351 A1 beschreibt einen Radiallüfter mit zwei Deckscheiben. Der Radiallüfter ist von einer Luftleithaube umschlossen, welche mittels eines Trennblechs ein rein radiales Ansaugen der Umgebungsluft zulässt. Ein Ende der Luftleithaube ist düsenförmig ausgeführt, um die angesaugte Umgebungsluft an das Getriebegehäuse zu leiten.

Eine Besonderheit bei der Verwendung eines Radiallüfters in einer Luftleithaube besteht demnach darin, dass der radiale Luftstrom des Lüfters umgelenkt werden muss. Wenn das Getriebe zylindrische Anbauteile, zum Beispiel ein Anbauteil in Form einer Rücklaufsperre, umfasst, die auf die Antriebswelle montiert werden, ergibt sich als zusätzliches Problem, dass bei einer Kühlung des Getriebes mittels Umgebungsluft ein solches Anbauteil oder eine Mehrzahl von Anbauteilen zu überbrücken sind.

Der Erfindung liegt daher die Aufgabe zugrunde, eine Lösung zur effizienten Kühlung eines Getriebes mittels eines Radiallüfters vorzuschlagen und gleichzeitig eine Möglichkeit vorzusehen, etwaige Anbauteile zu überbrücken und mit dem zur Kühlung des Getriebes erzeugten Luftstrom ebenfalls zu kühlen.

Diese Aufgabe wird erfindungsgemäß mittels eines Getriebes mit einer Luftleithaube sowie einer solchen Luftleithaube mit den Merkmalen der unabhängigen Ansprüche 1 und 6 gelöst. Ausführungsformen sind durch die abhängigen Ansprüche definiert.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Es zeigen
- FIG 1: ein Getriebegehäuse mit einer daran angebrachten Luftleithaube,
- FIG 2: einen vergrößerten Ausschnitt der Darstellung in FIG 1 im Längsschnitt,
- FIG 3: die Luftleithaube gemäß FIG 1 und
- FIG 4: einen Radiallüfter.

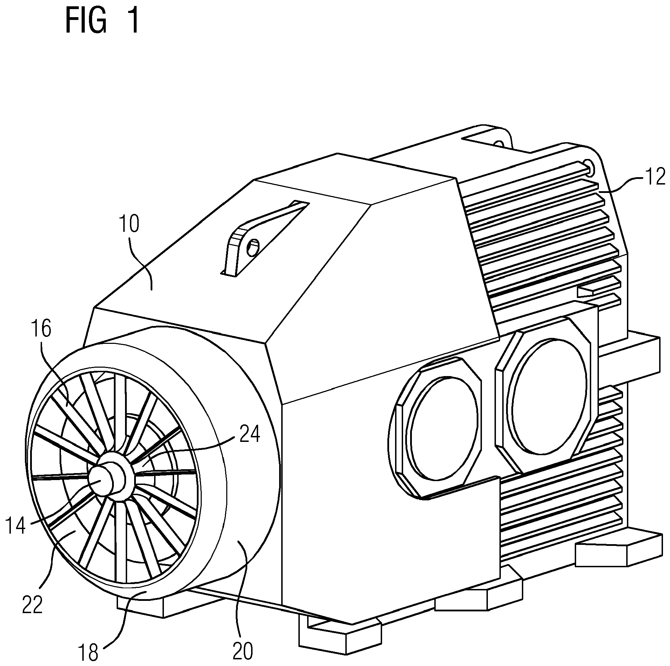

Die Darstellung in FIG 1 zeigt eine Ausführungsform einer Luftleithaube 10 gemäß dem hier vorgeschlagenen Ansatz in einem an einem Getriebegehäuse 12 eines selbst nicht gezeigten Getriebes angebrachten Zustand. Bei der gezeigten Ausführungsform deckt die Luftleithaube 10 das Getriebegehäuse 12 zum Teil ab und weist entsprechend einen das Getriebegehäuse 12 zumindest zum Teil abdeckenden Abschnitt auf.

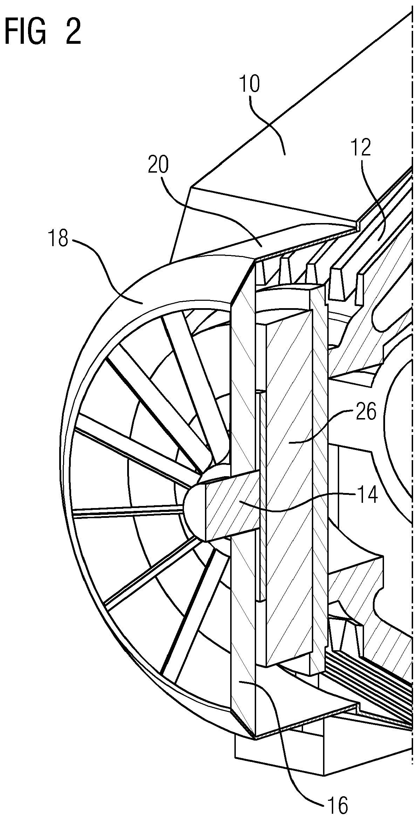

Gegenüberliegend von dem das Getriebegehäuse 12 zumindest zum Teil abdeckenden Abschnitt nimmt die Luftleithaube 10 einen auf einer Antriebswelle 14 des Getriebegehäuses 12 angebrachten Radiallüfter 16 auf und weist dazu einen den Radiallüfter 16 umgebenden konischen Abschnitt 18 sowie im Anschluss daran und weiter in Richtung auf das Getriebegehäuse 12 einen zylindrischen Abschnitt 20 auf. Der Radiallüfter 16 saugt durch eine durch den konischen Abschnitt 18 begrenzte Öffnung 22 Umgebungsluft an und fördert diese im Innern der Luftleithaube 10 nach außen auf die Innenoberfläche des konischen Abschnitts 18. Der konische Abschnitt 18 bewirkt eine Umlenkung des radialen Luftstroms in Richtung auf das Getriebegehäuse 12 und optional unterstützt eine mit einem Radius oder einer Fase versehene Lüfternabe 24 diese Umlenkung des Luftstroms. Auf dem Weg zum Getriebegehäuse 12 strömt der umgelenkte Luftstrom jedenfalls durch den zylindrischen Abschnitt 20 und ist dort zur Kühlung von vor dem Getriebe und auf die Antriebswelle 14 montierten Anbauteilen, wie zum Beispiel einer Planetenradstufe oder einer Rücklaufsperre 26 (FIG 2) oder sonstigen Getriebekomponenten, wirksam.

Der zylindrische Abschnitt 20 dient der Kanalisation der angesaugten Umgebungsluft in Richtung auf das Getriebegehäuse 12 sowie dem Überbrücken und Kühlen von dort gegebenenfalls zusätzlich angebrachten, meist zylindrischen Anbauteilen. Am Ende des zylindrischen Abschnitts 20 trifft die kanalisierte Luft auf das Getriebegehäuse 12. Durch den Aufprall des Luftstroms (Prallkühlung) auf das Getriebegehäuse 12 wird lokal eine starke Entwärmung des von dem Getriebegehäuse 12 umgebenen Getriebes erzielt. Die Luft wird anschließend mittels der Luftleithaube 10 weiter um das Getriebegehäuse 12 herumgeführt.

Bei einer bevorzugten Ausführungsform werden die Luftleithaube 10 und der Radiallüfter 16 so ausgeführt, dass eine Gesamtbreite des Getriebegehäuses 12 nicht überschritten wird. Der Volumenstrom sowie der vom Radiallüfter 16 aufgebrachte Druck kann über unterschiedliche Anzahlen von Radiallüfterflügeln, eine Variation der Breite des Radiallüfters 16 sowie eine Variation des Winkels der Abschrägung der Enden der Radiallüfterflügel beeinflusst werden.

Die Darstellung in FIG 2 zeigt einen Ausschnitt aus der Darstellung gemäß FIG 1 im Längsschnitt. Hier ist speziell eine im Bereich des zylindrischen Abschnitts 20 angebrachte Rücklaufsperre 26 als Beispiel für ein im Bereich des zylindrischen Abschnitts 20 platzierbares Anbauteil erkennbar.

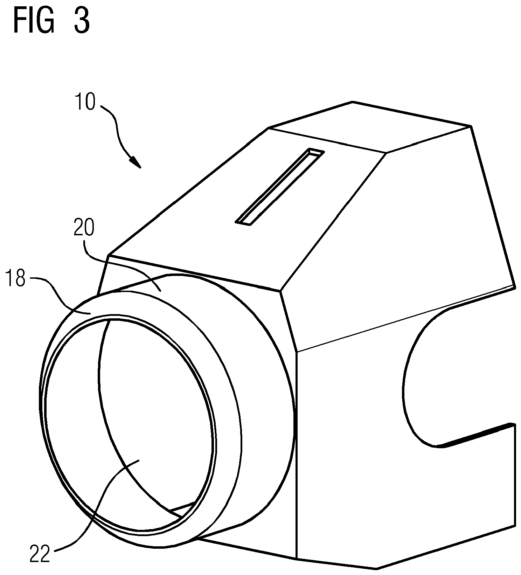

Die Darstellung in FIG 3 zeigt die Luftleithaube 10 der in FIG 1 gezeigten Ausführungsform ohne das Getriebegehäuse 12 und ohne einen Radiallüfter 16. Man erkennt deutlich vor dem das Getriebegehäuse 12 umgebenden Teil der Luftleithaube 10 deren zylindrischen Abschnitt 20, den an den zylindrischen Abschnitt 20 anschließenden konischen Abschnitt 18 sowie die von dem konischen Abschnitt 18 begrenzte Öffnung 22. Durch die Öffnung 22 saugt im Betrieb ein auf einer Antriebswelle 14 eines mit der Luftleithaube 10 versehenen Getriebes angebrachter Radiallüfter 16 Umgebungsluft zur Kühlung des Getriebes durch eine Wärmeabfuhr von dessen Getriebegehäuse 12 sowie zur Kühlung von gegebenenfalls im Bereich des zylindrischen Abschnitts 20 befindlichen Anbauteilen an.

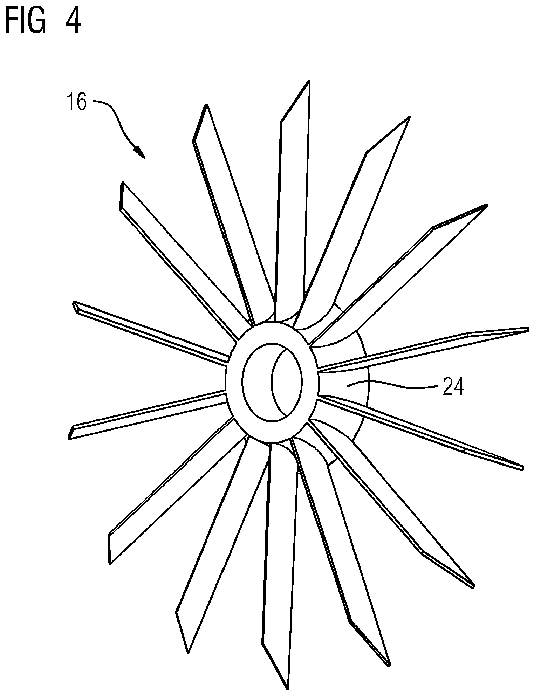

Die Darstellung in FIG 4 zeigt abschließend eine mögliche Ausführungsform eines Radiallüfters 16 mit einer Mehrzahl von regelmäßig beabstandeten Radiallüfterflügeln. Bei der in FIG 4 gezeigten Ausführungsform des Radiallüfters 16 weist dieser eine mit einer Fase versehene Lüfternabe 24 auf. Diese ist zusätzlich zum konischen Abschnitt 18 der Luftleithaube 10 zur Umlenkung der angesaugten Luft in Richtung auf das Getriebegehäuse 12 wirksam. Bei der gezeigten Ausführungsform sind die Radiallüfterflügel im gleichen Winkel wie der konisehe Abschnitt 18 angeschrägt, so dass sich eine maximal mögliche Länge der Radiallüfterflügel und damit eine möglichst große Luftleistung des Radiallüfters 16 ergibt.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung, wie durch die Ansprüche definiert, zu verlassen.

Einzelne Aspekte der hier vorgelegten Beschreibung lassen sich kurz wie folgt zusammenfassen: Angegeben werden eine Luftleithaube 10 für ein Getriebe und zur Anbringung an dessen Getriebegehäuse 12, sowie ein Getriebe mit einer Luftleithaube 10, wobei die Luftleithaube 10 einen das Getriebegehäuse 12 zumindest zum Teil abdeckenden Abschnitt und im Bereich einer Antriebswelle 14 einen zylindrischen Abschnitt 20 sowie einen konischen Abschnitt 18 aufweist, wobei der konische Abschnitt 18 zur Aufnahme eines auf der Antriebswelle 14 angebrachten Radiallüfters 16 und der zylindrische Abschnitt 20 zur Aufnahme eines auf der Antriebswelle 14 angebrachten Anbauteils bestimmt ist.

## Patentansprüche

1. Getriebe mit einem Getriebegehäuse (12), einer Antriebswelle (14), einem auf der Antriebswelle (14) angebrachten Radiallüfter (16) und einer an dem Getriebegehäuse (12) angebrachten und den Radiallüfter (16) umschließenden Luftleithaube (10), wobei
die Luftleithaube (10) einen Abschnitt, mit welchem sie das Getriebegehäuse (12) zumindest zum Teil umschließt, und einen an diesen Abschnitt anschließenden zylindrischen Abschnitt (20) sowie einen wiederum daran anschließenden konischen Abschnitt (18) umfasst, wobei
der zylindrische Abschnitt (20) zur Aufnahme eines auf der Antriebswelle (14) anbringbaren Anbauteils bestimmt ist, **dadurch gekennzeichnet, dass** die Radiallüfterflügel im gleichen Winkel wie der konische Abschnitt (18) angeschrägt sind, so dass sich eine maximal mögliche Länge der Radiallüfterflügel und damit eine möglichst große Luftleistung des Radiallüfters (16) ergibt.

2. Getriebe nach Anspruch 1, wobei mittels des Radiallüfters (16) angesaugte Umgebungsluft nach einer Umlenkung mittels des konischen Abschnitts (18) und nach Durchströmen des zylindrischen Abschnitts (20) zur Prallkühlung des Getriebegehäuses (12) wirksam ist.

3. Getriebe nach Anspruch 1 oder 2, wobei mittels des konischen Abschnitts (18) umgelenkte angesaugte Umgebungsluft mittels des zylindrischen Abschnitts (20) auf eine Seitenfläche des Getriebegehäuses (12) leitbar ist.

4. Getriebe nach einem der vorangehenden Ansprüche, wobei der Radiallüfter (16) eine mit einem Radius oder einer Fase versehene Lüfternabe (24) aufweist und wobei der Radiallüfter (16) mittels der Lüfternabe (24) auf der Antriebswelle (14) angebracht ist.

5. Getriebe nach einem der vorangehenden Ansprüche mit zumindest einem an der Antriebswelle (14) und zwischen dem Radiallüfter (16) und dem Getriebe angebrachten Anbauteil, wobei der zylindrische Abschnitt (20) das oder jedes Anbauteil umgibt.

6. Luftleithaube (10) für ein Getriebe nach einem der vorangehenden Ansprüche und zur Anbringung an dessen Getriebegehäuse (12), wobei die Luftleithaube (10) einen das Getriebegehäuse (12) zumindest zum Teil umschließenden Abschnitt und im Bereich einer Antriebswelle (14) des Getriebes einen zylindrischen Abschnitt (20) sowie einen konischen Abschnitt (18) aufweist, wobei der konische Abschnitt (18) zur Aufnahme eines auf der Antriebswelle (14) angebrachten Radiallüfters (16) und der zylindrische Abschnitt (20) zur Aufnahme eines auf der Antriebswelle (14) angebrachten Anbauteils bestimmt ist, **dadurch gekennzeichnet, dass** der konische Abschnitt (18) im gleichen Winkel wie die Radiallüfterflügel angeschrägt sind, so dass sich eine maximal mögliche Länge der Radiallüfterflügel und damit eine möglichst große Luftleistung des Radiallüfters (16) ergibt.

## Claims

1. Transmission with a transmission housing (12), a drive shaft (14), a radial fan (16) which is attached on the drive shaft (14), and an air guiding hood (10) which is attached on the transmission housing (12) and encloses the radial fan (16), the air guiding hood (10) comprising a section, with which it encloses the transmission housing (12) at least partially, and a cylindrical section (20) which adjoins the said section, and a conical section (18) which in turn adjoins the latter, the cylindrical section (20) being intended to receive an attachment part which can be attached on the drive shaft (14), **characterized in that** the radial fan blades are inclined at the same angle as the conical section (18), which results in a maximum possible length of the radial fan blades and therefore as great an air output of the radial fan (16) as possible.

2. Transmission according to Claim 1, ambient air which is sucked in by means of the radial fan (16) being active for impingement cooling of the transmission housing (12) after a deflection by means of the conical section (18) and after flowing through the cylindrical section (20).

3. Transmission according to Claim 1 or 2, it being possible for air which is sucked in and is deflected by means of the conical section (18) to be guided onto a side face of the transmission housing (12).

4. Transmission according to one of the preceding claims, the radial fan (16) having a fan hub (24) which is provided with a radius or a chamfer, and the radial fan (16) being attached on the drive shaft (14) by means of the fan hub (24).

5. Transmission according to one of the preceding claims with at least one attachment part which is attached on the drive shaft (14) and between the radial fan (16) and the transmission, the cylindrical section (20) surrounding the or each attachment part.

6. Air guiding hood (10) for a transmission according to one of the preceding claims and for attaching to its transmission housing (12), the air guiding hood (10) having a section which encloses the transmission housing (12) at least partially and, in the region of a drive shaft (14) of the transmission, a cylindrical section (20) and a conical section (18), the conical section (18) being intended to receive a radial fan (16) which is attached on the drive shaft (14), and the cylindrical section (20) being intended to receive an attachment part which is attached on the drive shaft (14), **characterized in that** the conical section (18) is inclined at the same angle as the radial fan blades, which results in a maximum possible length of the radial fan blades and therefore as great an air output of the radial fan (16) as possible.

## Revendications

1. Engrenage comprenant un carter (12) d'engrenage, un arbre (14) menant, un ventilateur (16) radial monté sur l'arbre (14) menant et une hotte (10) de conduite d'air montée sur le carter (12) d'engrenage et entourant le ventilateur (16) radial, dans lequel
la hotte (10) de conduite d'air comprend une partie, par laquelle elle entoure, au moins en partie, le carter (12) d'engrenage et une partie (20) cylindrique se raccordant à cette partie, ainsi qu'une partie (18) conique s'y raccordant à son tour, dans lequel
la partie (20) cylindrique est destinée à la réception d'une partie ajoutée pouvant être montée sur l'arbre (14) menant, **caractérisé en ce que** les pales du ventilateur radial sont inclinées du même angle que la partie (18) conique, de manière à obtenir une longueur maximum possible des pales du ventilateur radial et ainsi une puissance de ventilation aussi grande que possible du ventilateur (16) radial.

2. Engrenage suivant la revendication 1, dans lequel de l'air ambiant aspiré au moyen du ventilateur (16) radial est, après une déviation au moyen de la partie (18) conique et après avoir passé dans la partie (20) cylindrique, efficace pour refroidir par impact le carter (12) d'engrenage.

3. Engrenage suivant la revendication 1 ou 2, dans lequel de l'air ambiant aspiré et dévié au moyen de la partie (18) conique peut, au moyen de la partie (20) cylindrique, être envoyé sur une surface latérale du carter (12) d'engrenage.

4. Engrenage suivant l'une des revendications précédentes, dans lequel le ventilateur (16) radial a un moyeu (24) de ventilateur ayant un rayon ou pourvu d'un biseau et dans lequel le ventilateur (16) radial est monté sur l'arbre (14) menant au moyen du moyeu (24) de ventilateur.

5. Engrenage suivant l'une des revendications précédentes, comprenant au moins une partie ajoutée à l'arbre (14) menant et montée entre le ventilateur (16) radial et l'engrenage, la partie (20) cylindrique entourant la ou chaque partie ajoutée.

6. Hotte (10) de conduite d'air d'un engrenage suivant l'une des revendications précédentes et à monter sur son carter (12) d'engrenage, la hotte (10) de conduite d'air comportant une partie entourant, au moins en partie, le carter (12) d'engrenage et, dans la région d'un arbre (14) menant d'engrenage, une partie (20) cylindrique, ainsi qu'une partie (18) conique, la partie (18) conique étant destinée à recevoir un ventilateur (16) radial monté sur l'arbre (14) menant et la partie (20) cylindrique étant destinée à recevoir une partie ajoutée montée sur l'arbre (14) menant, **caractérisée en ce que** les pales du ventilateur radial sont inclinées du même angle que la partie (18) conique, de manière à obtenir une longueur maximum possible des pales du ventilateur radial et ainsi une puissance de ventilation aussi grande que possible du ventilateur (16) radial.
